# EUROPEAN PATENT APPLICATION

(11) **EP 3 360 669 A2**
(43) Date of publication of application: **15.08.2018**
(21) Application number: 18155864.4
(22) Date of filing: 08.02.2018
(51) Int. Cl.: B29C 70/32, B29D 99/00, B29L 31/30

(54) **FILAMENT WINDING PROCESS FOR FILLETS**

(30) Priority: 10.02.2017 US 201715429702
(71) Applicant: Rohr, Inc., Chula Vista, CA 91910-2098 (US)
(72) Inventor: THAI, Bryan, Poway, CA California 92064 (US)
(74) Representative: Dehns

(57) **Abstract**

A fillet for a composite panel may be formed by pulling a prepreg slit tape from a spool and winding the slit tape into a fillet mold around the perimeter of a wheel. The tension, heat, and speed may all be adjusted during the winding process. A guide may guide the slit tape to specific locations in the fillet mold. The fillet may be removed from the wheel and coupled to the composite panel and cured.

## Description

### FIELD

The present disclosure relates to an aircraft nacelles, and more particularly, to processes for manufacturing fillets for aircraft nacelles.

### BACKGROUND

Nacelle structures for jet engines of an aircraft provide a housing within which the jet engine is supported. Many components for aircraft nacelles are manufactured using composite materials. Composite materials tend to have a high strength-to-weight advantage compared to traditional metals. One particular application for the use of composite materials is for fabricating panels. One type of panel may include a single skin with multiple laminar layers that are formed from composite materials such as graphite or an aromatic polyamide fiber of high tensile strength that are embedded in a resin matrix. One or more stiffening members, sometimes referred to as "hollow hats" due to their cross-sectional shape, may extend from the inside (non-aerodynamic) surface of the skin to provide additional strength to the panel. In some cases, a mandrel is used to form the shape of the stiffening member, and the composite skin is co-cured with the stiffening member with the mandrel in place. After the curing process, the mandrel is removed from the panel. Small gaps may exist at the edges where different components, such as the stiffeners and panels are joined together. Fillets may be manufactured to fit into the gaps and increase the strength at the joints between components and hoop strength.

The fillets may be manufactured by laying up strips of prepreg material by hand. However, this process may take many hours or days to complete. Additionally, existing fillets may be manufactured as a straight component, which is then bent when coupled to curved composite panels. Bending the 3-dimensional fillets can result in undesirable buckling or creasing of the fillets.

### SUMMARY

A method of manufacturing a fillet may comprise coupling a slit tape to a wheel comprising a fillet mold, and rotating the wheel, wherein the rotating the wheel causes the slit tape to wrap around the wheel into the fillet mold.

In various embodiments, the slit tape may comprise a plurality of fibers preimpregnated with a resin matrix. The fillet mold may comprise a first convex side and a second convex side. A tension may be applied to a spool comprising the slit tape. The tension may be altered during the rotating according to a pattern. The slit tape may be heated. The heat may be varied during the rotating. The slit tape may be guided into the fillet mold using a guide. The guide may be moved during the rotating according to a pattern. The fillet may be coupled to a fan cowl panel.

A method of manufacturing a fillet may comprise instructing, by a computer, a wheel motor to rotate a wheel; instructing, by the computer, a tensioning device to apply tension to a spool comprising a slit tape, wherein the slit tape is coupled to the wheel; instructing, by the computer, a heater to heat the slit tape; and instructing, by the computer, a guide to direct the slit tape to a placement on the wheel. The wheel may comprise a fillet mold at a perimeter of the wheel. The slit tape may form the fillet within the fillet mold. The fillet may be removed from the fillet mold. The fillet may be coupled to a fan cowl panel.

A method of reinforcing a fan cowl panel may comprise winding a prepreg material around a wheel into a fillet mold, such that the prepreg material forms a fillet within the fillet mold; removing the fillet from the fillet mold; cutting the fillet to a first length; and coupling the fillet to the fan cowl panel.

In various embodiments, the method may comprise curing the fillet and the fan cowl panel. The fillet may be coupled to a stiffening member on the fan cowl panel. A speed of the winding, a tension on the prepreg material, an amount of heat applied to the slit tape, and a guide location may be varied during the winding according to a pattern stored on a computer. The fillet mold may comprise a first convex surface and a second convex surface.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates a perspective view of a nacelle in accordance with various embodiments;
FIG. 2 illustrates a perspective view of a stiffening member for a fan cowl panel in accordance with various embodiments;
FIG. 3 illustrates a cross-section view of the stiffening member in accordance with various embodiments;
FIG. 4 illustrates an enlarged cross-section view of the stiffening member with a fillet in accordance with various embodiments;
FIG. 5 illustrates a system for forming a fillet in accordance with various embodiments;
FIG. 6 illustrates a cross-section view of a fillet mold in accordance with various embodiments;
FIG. 7 illustrates a slit tape pattern for forming a fillet in accordance with various embodiments; and
FIG. 8 illustrates a flowchart of a process for manufacturing a fillet in accordance with various embodiments.

### DETAILED DESCRIPTION

The detailed description of various embodiments herein makes reference to the accompanying drawings, which show various embodiments by way of illustration. While these various embodiments are described in sufficient detail to enable those skilled in the art to practice the inventions, it should be understood that other embodiments may be realized and that logical, chemical and mechanical changes may be made without departing from the spirit and scope of the inventions. Thus, the detailed description herein is presented for purposes of illustration only and not of limitation. For example, the steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials. In some cases, reference coordinates may be specific to each figure.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion.

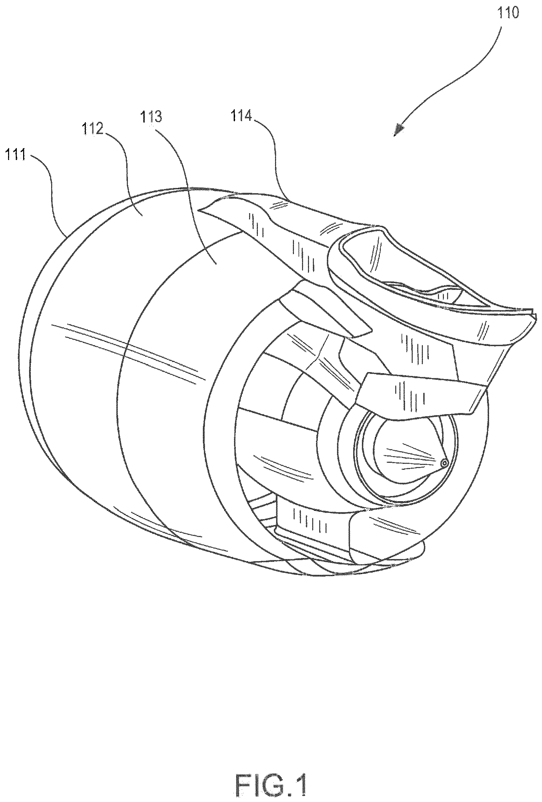

Referring to FIG. 1, a nacelle 100 for a gas turbine engine is illustrated according to various embodiments. The nacelle 100 may comprise an inlet 110, a fan cowl 120, and a thrust reverser 130. The nacelle 100 may be coupled, directly or indirectly, to a pylon 140, which may mount the nacelle 100 to an aircraft wing or aircraft body. The thrust reverser 130 may comprise a translating sleeve which translates relative to one or more track beams in order to deploy the thrust reverser 130.

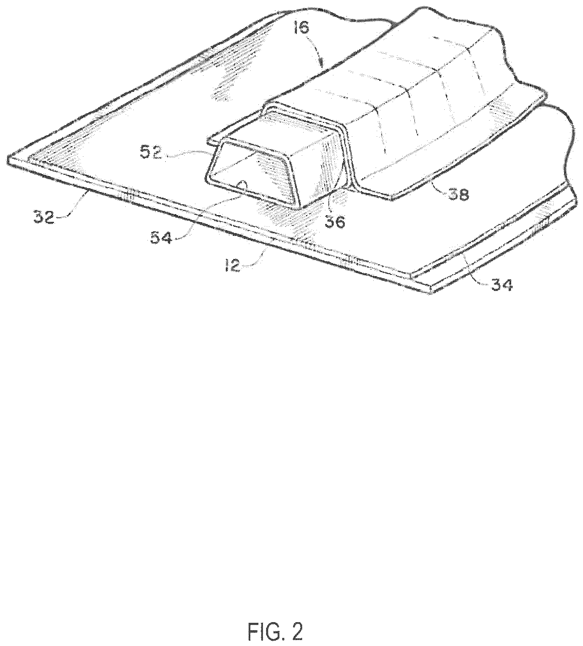

Referring to FIG. 2, a perspective view of a mandrel 52 in a hollow stiffening member 16 is illustrated according to various embodiments. The skin 12 of a panel may comprise a first layer 34 and a second layer 38. The first layer 34 and the second layer 38 may each comprise one or more composite layers formed from a fabric bonded together by a resin matrix. The panel may comprise a stiffening member 16. The stiffening member 16 may be formed by placing a mandrel 52 between the first layer 34 and the second layer 38. The first layer 34 and the second layer 38 may be co-cured with the mandrel 52 in place in order to form the stiffening member 16. The stiffening member 16 may take the shape of the mandrel 52, which may comprise flat sides 54 and angled sides 36. The skin 12 may be cured on a lay-up mandrel 32 to provide the general shape of the skin 12. The first layer 34 and the second layer 38 may be structurally bonded together into a unitary structure during the curing process.

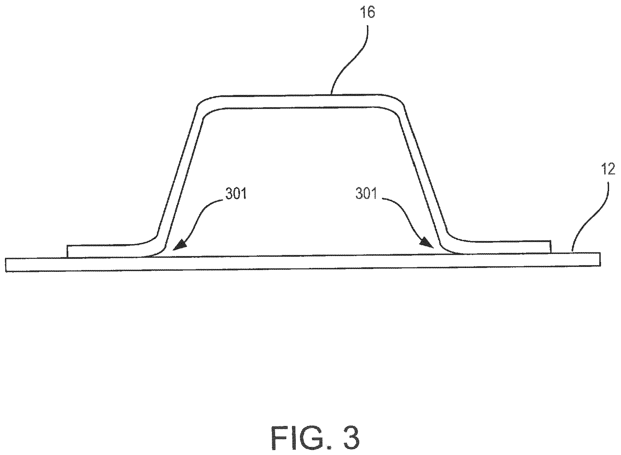

Referring to FIG. 3, a cross-section view of a stiffening member 16 coupled to a skin 12 of a fan cowl panel is illustrated according to various embodiments. At the joints where the stiffening member meets the skin, small gaps 310 may be present between the stiffening member 16 and the skin 12.

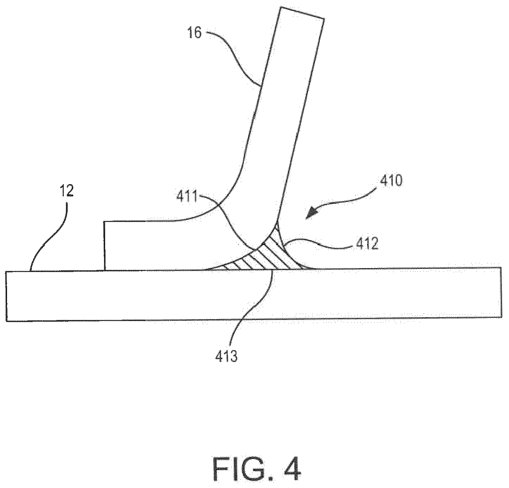

Referring to FIG. 4, an enlarged cross-section view of the stiffening member 16 coupled to the skin 12 of the fan cowl panel with a fillet 410 is illustrated according to various embodiments. The fillets 410 may be inserted between the stiffening member 16 and the skin 12. The fillets 410 may increase the strength of the joint between the stiffening member 16 and the skin 12 of the fan cowl panel. A cross-section of the fillet 410 may comprise a generally triangular shape. The fillet 410 may comprise a first concave side 411, a second concave side 412, and a flat side 413. The flat side 413 may be coupled to the skin 12 of the fan cowl panel. The first concave side 401 may be coupled to the stiffening member 16. The second concave side 412 may create a gradual ramp from the stiffening member 16 to the skin 12 of the fan cowl panel.

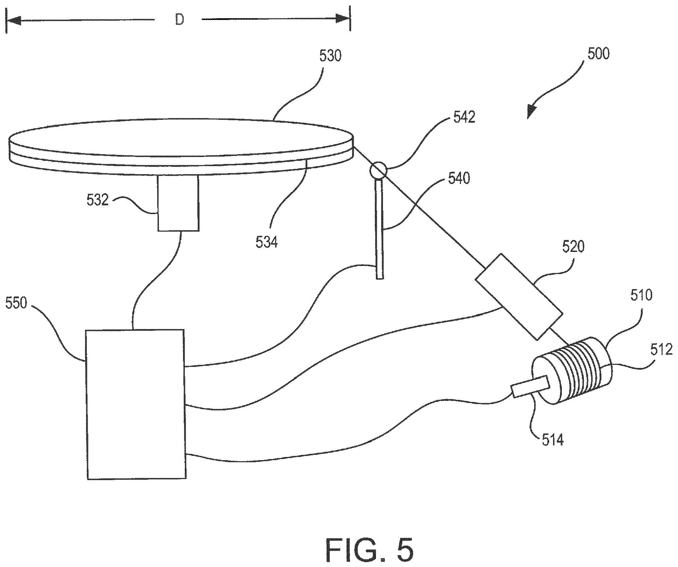

Referring to FIG. 5, a system for manufacturing a fillet is illustrated according to various embodiments. The system 500 may comprise a spool 510 of slit tape 512. The slit tape 512 may comprise a prepreg material. The prepreg fabric may be formed in a known manner where a resin is incorporated into a fiber woven or nonwoven fabric layer, and then stored as a prepreg. The prepreg may comprise filaments of fibers, such as carbon fibers within a resin matrix. In various embodiments, the fibers may comprise carbon, glass, aramid or other known types. The matrix may be thermoset polymers such as epoxies, thermoplastics, and other known materials. Prepreg sheets may be cut into narrow strips to make the slit tape 512. In various embodiments, the slit tape 512 may comprise a width of 0.1 inches - 0.2 inches (.25 cm - .51 cm). The slit tape 512 may comprise an areal weight of 100 grams per square meter (gsm) - 200 gsm. The spool 510 may comprise a tensioning device 514, such as a drag system, which adjusts the amount of tension required to unwind the spool 510 and payout the slit tape 512.

The system 500 may comprise a heater 520. The slit tape 512 may pass through the heater 520 as the slit tape 512 is unwound from the spool 510. The heater 520 may heat the slit tape 512. Heating the slit tape 512 may increase the elasticity or malleability of the slit tape 512. The heater 520 may comprise electric heating elements, or any other suitable type of heat source.

The system 500 may comprise a wheel 530. The wheel may be rotated by a wheel motor 532. As the wheel 530 rotates, the wheel 530 may pull the slit tape 512 from the spool 510. The slit tape 512 may be wound into a fillet mold 534 around a perimeter of the wheel 530. The fillet mold 534 may have the shape of a cross-section of the fillets 410 illustrated in FIG. 4, such that the fillet mold 534 forms the shape of the fillets 410, including the first concave side 411, the second concave side 412, and the flat side 413. As the wheel 530 rotates, layers of slit tape 512 are stacked up within the fillet mold 534. In various embodiments, the wheel 530 may rotate 50-100 revolutions to create the fillet. However, in various embodiments the wheel 530 may rotate 5-1000 revolutions to create the fillet. The number or revolutions may vary based on the size of the fillet mold 534 and the size of the slit tape 512. The wheel 530 may comprise a diameter D. In various embodiments, the diameter D may match the diameter of a fan cowl in which the fillet is to be installed. However, in various embodiments, the diameter D may be greater or less than the diameter of a fan cowl in which the fillet is to be installed. Regardless, the circular shape of the fillet may decrease deformations when fabricating the fillet to couple to the fan cowl panel.

The system 500 may comprise a guide 540. In various embodiments, the guide 540 may comprise a ring 542. The slit tape 512 may be spooled onto the wheel 530 through the interior of the ring 542. The guide 540 may be configured to translate relative to the wheel 530 to deposit layers of the slit tape 512 at different locations within the fillet mold 534. In various embodiments, the guide 540 may translate the spool 510 relative to the wheel 530.

Each of the components of system 500 may be controlled by a computer 550. The computer 550 may comprise a processor and a tangible, non-transitory computer-readable storage medium having instructions stored thereon. The instructions, when executed, may cause the components of system 500 to perform various operations. For example, the instructions may cause the wheel motor 532 to rotate the wheel at various speeds; the guide 540 to move and change the location of deposition of the slit tape 512 within the fillet mold 534; the heater 520 to heat the slit tape 512 at various intervals and temperatures; and the tensioning device 514 to alter the tension on the spool 510.

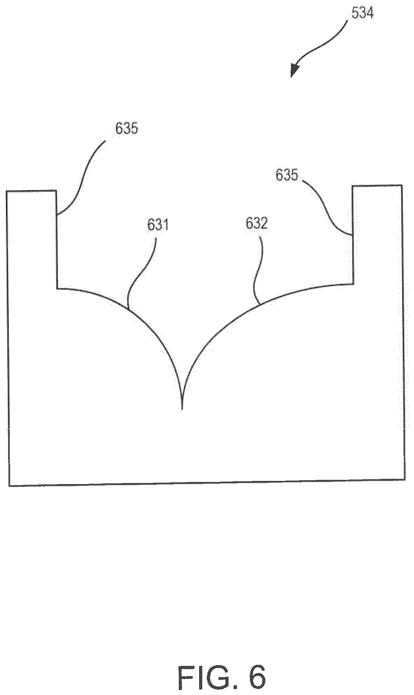

Referring to FIG. 6, a cross-section view of the fillet mold 534 is illustrated according to various embodiments. In various embodiments, the fillet mold 534 may be a portion of the perimeter of the wheel. However, in various embodiments the fillet mold 534 may be inserted in to a channel of the wheel, and fillet molds of different sizes and shapes may be utilized with the same wheel. The fillet mold 534 may comprise a first convex surface 631, a second convex surface 633, and optional side walls 635. Referring temporarily to FIG. 6 and FIG. 4, the first convex surface 631 of the fillet mold 534 may correspond to the first concave side of the fillet, and the second convex surface of the fillet mold 534 may correspond to the second concave side of the fillet. Slit tape may be wound into the fillet mold 534 until the desired shape of the fillet is obtained.

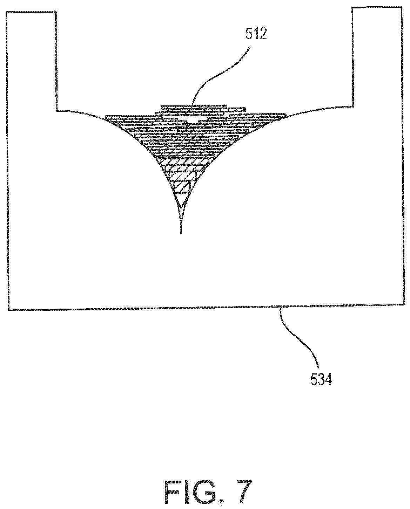

Referring to FIG. 7, an example of a pattern for winding slit tape 512 into a fillet mold 534 is illustrated according to various embodiments. As the slit tape 512 is wound into the fillet mold 534, the tension on the slit tape 512, and from subsequent wraps of slit tape 512, may cause the slit tape 512 to deform and squeeze into the fillet mold 534. As wraps of slit tape 512 build up within the fillet mold 534, it may be desirable to alter the location of the new wraps of slit tape 512 to decrease buildup of slit tape 512 unevenly within the fillet mold 534. Each wrap of slit tape 512 may be deposited at a different location within the fillet mold 534. However, the illustrated pattern is merely one example pattern, and those skilled in the art will recognize that various patterns may be suitable for building up a fillet.

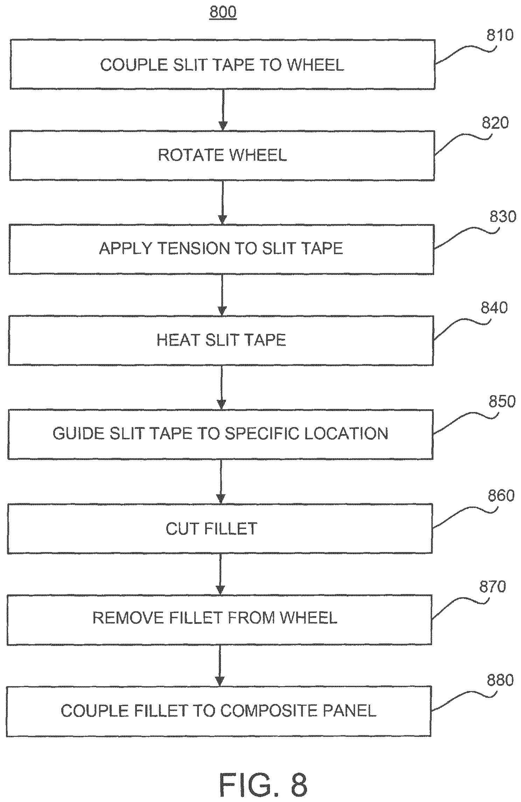

Referring to FIG. 8, a flowchart of a process 800 for manufacturing a fillet is illustrated according to various embodiments. A slit tape may be coupled to a wheel (step 810). In various embodiments, one wrap, or a portion of a wrap, of slit tape may be inserted into a fillet mold in the wheel by hand, and friction between the slit tape and the wheel may be sufficient to couple the slit tape to the wheel. In various embodiments, the slit tape may be bonded or fastened to the wheel. The wheel may be rotated, which pulls the slit tape from a spool (step 820). A wheel motor may drive the rotation of the wheel. A computer may provide instructions to the wheel motor, which causes the wheel motor to rotate at varying speeds according to a pattern stored in the computer. As the wheel rotates, the slit tape wraps around the wheel into the fillet mold. The slit tape may form multiple layers, which are compressed together, thereby forming a fillet. The resin material in the prepreg slit tape may bond adjacent layers together, such that the multiple layers bond into the three-dimensional fillet taking the shape of the fillet mold. A tensioning device may apply a tension to the spool of slit tape as the wheel pulls the slit tape from the spool (step 830). The computer may provide instructions to the tensioning device, which causes the tensioning device to apply varying tension according to the pattern stored in the computer. A heater may heat the slit tape as the slit tape is pulled from the spool (840). The computer may provide instructions to the heater, which causes the heater to apply varying heat according to the pattern stored in the computer. A guide may direct the slit tape to a specific location in the fillet mold (step 850). The computer may provide instructions to the guide, which causes the guide to move and direct the slit tape to different locations according to the pattern stored in the computer.

Once the pattern is completed, the fillet may be a full hoop in the fillet mold around the wheel. The fillet may be cut in at least one location, creating a gap in the full hoop (step 860). The fillet may then be removed from the wheel (step 870). The fillet may be cut to the desired length. In various embodiments, the fillet mold may have a radius matching the desired radius of the fillet. However, in various embodiments, the fillet mold may have a radius different than the desired radius of the fillet, and the fillet may be slightly bent to increase or decrease the radius of the fillet to match the radius of a composite panel. The fillet may be placed in the desired location on a composite panel. The fillet may be cured in place with the composite panel (step 880).

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f), unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching may be used throughout the figures to denote different parts but not necessarily to denote the same or different materials.

## Claims

1. A method (800) of manufacturing a fillet comprising:
coupling (810) a slit tape to a wheel comprising a fillet mold; and
rotating (820) the wheel, wherein the rotating the wheel causes the slit tape to wrap around the wheel into the fillet mold.

2. The method of claim 1, wherein the slit tape comprises a plurality of fibers preimpregnated with a resin matrix.

3. The method of claim 1 or 2, wherein the fillet mold comprises a first convex side and a second convex side.

4. The method of claim 1, 2 or 3, further comprising applying tension (830) to a spool comprising the slit tape.

5. The method of claim 4, further comprising altering the tension during the rotating according to a pattern.

6. The method of any preceding claim, further comprising heating (940) the slit tape, and preferably
further comprising varying the heating during the rotating.

7. The method of any preceding claim, further comprising guiding the slit tape (850) into the fillet mold using a guide, and preferably
further comprising moving the guide during the rotating according to a pattern.

8. The method of any preceding claim, further comprising coupling the fillet (880) to a fan cowl panel.

9. A method of manufacturing a fillet comprising:
instructing, by a computer, a wheel motor to rotate a wheel;
instructing, by the computer, a tensioning device to apply tension to a spool comprising a slit tape, wherein the slit tape is coupled to the wheel;
instructing, by the computer, a heater to heat the slit tape; and
instructing, by the computer, a guide to direct the slit tape to a location on the wheel.

10. The method of claim 9, wherein the wheel comprises a fillet mold at a perimeter of the wheel.

11. The method of claim 10, wherein the slit tape forms the fillet within the fillet mold, and preferably
further comprising removing the fillet from the fillet mold, and preferably
further comprising coupling the fillet to a fan cowl panel.

12. A method of reinforcing a fan cowl panel comprising:
winding a prepreg material around a wheel into a fillet mold, such that the prepreg material forms a fillet within the fillet mold;
removing the fillet from the fillet mold;
cutting the fillet to a first length; and
coupling the fillet to the fan cowl panel.

13. The method of claim 12, further comprising curing the fillet and the fan cowl panel.

14. The method of claim 12, further comprising coupling the fillet to a stiffening member on the fan cowl panel.

15. The method of claim 12, 13 or 14, further comprising varying a speed of the winding, a tension on the prepreg material, an amount of heat applied to the prepreg material, and a guide location during the winding according to a pattern stored on a computer, or
wherein the fillet mold comprises a first convex surface and a second convex surface.
